# FASCICULE DE BREVET EUROPEEN

(11) **EP 1 219 885 B1**
(45) Date de publication et mention de la délivrance du brevet: **08.06.2005**
(21) Numéro de dépôt: 01420246.9
(22) Date de dépôt: 27.12.2001
(51) Int. Cl.: F16L 37/084

(54) **Elément femelle d'un raccord et raccord rapide incorporant un tel élément**
Steckdosenelement und Schnellkupplung und Vorrichtung die ein solches Element enthält
Female connection element and quick coupling comprising such an element

(30) Priorité: 28.12.2000 FR 0017235
(43) Date de publication de la demande: 03.07.2002
(73) Titulaire: STÄUBLI FAVERGES, 74210 Faverges (FR)
(72) Inventeur: Lacroix, Jean-Jacques, 74330 Lovagny (FR); Chappaz, René, 74210 Faverges (FR)
(74) Mandataire: Myon, Gérard Jean-Pierre

(56) Documents cités:
- US-A- 2 263 293
- US-A- 4 703 958
- US-A- 5 695 223
- US-A- 6 089 540

## Description

L'invention a trait à un élément femelle de raccord rapide et à un raccord rapide comprenant un tel élément.

Dans le domaine de la jonction amovible de canalisations parcourues par un fluide, il est connu d'utiliser un élément femelle de raccord qui comprend des moyens commandés de verrouillage d'un about mâle en configuration emmanchée dans l'élément femelle, c'est-à-dire en configuration raccordée des canalisations. Les moyens de verrouillage peuvent, dans certains cas, être commandés par un fourreau mobile selon une direction parallèle à l'axe de l'élément femelle. Les éléments de verrouillage peuvent également être commandés par un bouton mobile selon une direction globalement perpendiculaire à cet axe, l'utilisateur exerçant un effort d'enfoncement du bouton lorsqu'il convient de libérer le passage pour l'embout mâle lors de son extraction de l'élément femelle. De tels dispositifs sont connus, en particulier, du document US 5 695223.

C'est à ce second type particulier d'éléments femelles de raccord que s'applique la présente invention qui part de la constatation qu'il est parfois nécessaire d'empêcher un raccordement ou une déconnexion des éléments mâle et femelle d'un raccord. Ceci est en particulier le cas lorsque des impératifs de sécurité, liés à la nature du fluide transitant par le raccord, imposent de limiter les risques de fausse manoeuvre. Il est parfois nécessaire de prévoir que seul un personnel habilité peut procéder au raccordement ou à la déconnexion des éléments mâle et femelle d'un raccord, par exemple dans le domaine médical ou lorsque des fluides dangereux sont à manipuler. Dans certaines applications, il convient également de sécuriser les raccords contre les risques de vol du fluide qu'ils permettent de faire circuler.

Jusqu'à présent, il n'est pas possible de sécuriser efficacement un tel raccord.

C'est à ces inconvénients qu'entend plus particulièrement remédier l'invention en proposant un élément femelle de raccord du type précité, c'est-à-dire comprenant un bouton de commande de moyens de verrouillage d'un about mâle, qui est caractérisé en ce que le bouton porte des moyens commandés de blocage sélectif des moyens de verrouillage en configuration de retenue d'une partie d'un about et/ou en configuration d'opposition à l'introduction d'une partie d'un about.

Grâce à l'invention, il est possible d'immobiliser le bouton, par rapport à l'emplacement normal de l'about dans l'élément femelle, dans une position où il bloque, grâce aux moyens de verrouillage, le passage pour l'about mâle, ce qui évite les raccordements et connexions intempestifs, alors que l'encombrement global du raccord n'est pas sensiblement augmenté. La sécurité supplémentaire obtenue par le blocage du bouton est opérationnelle aussi bien lorsque le raccord est fermé, auquel cas ce blocage interdit l'ouverture du raccord, que lorsque le raccord est ouvert, auquel cas ce blocage interdit la fermeture du raccord.

Selon des aspects avantageux, un élément femelle de raccord conforme à l'invention incorpore une ou plusieurs des caractéristiques suivantes :
- le bouton définit un volume de réception d'une partie d'un about, ce bouton étant pourvu d'au moins un relief interne apte à coopérer avec au moins un relief externe de l'about pour le verrouiller en configuration emmanchée, alors que le bouton est apte à commander un mouvement d'écartement relatif de ces reliefs et que les moyens de blocage peuvent immobiliser l'about dans le logement, de telle sorte qu'un écartement de ces reliefs interne et externe est impossible. Grâce à cet aspect de l'invention, un déplacement du bouton ne permet pas de libérer l'about mâle. En variante, on peut prévoir que les moyens de blocage peuvent immobiliser le bouton dans une position où un écartement des reliefs précités est impossible. Dans ce cas, le bouton bloqué dans sa position sus-mentionnée empêche un écartement du relief externe de l'about et du relief interne du bouton, de telle sorte que l'about est immobilisé par rapport au bouton. Quelle que soit la variante, des moyens de charge élastique du bouton, vers une position d'engagement de son relief interne avec le relief externe d'un about, peuvent être prévus.
- Le bouton est équipé d'un pêne commandé par une serrure.
- Dans un premier mode de réalisation de l'invention, ce pêne est mobile selon une direction globalement parallèle à la direction de déplacement du bouton par rapport au corps, ce pêne étant apte à exercer sur un about mâle un effort de maintien de l'about en position d'engagement d'un relief externe de l'about avec un relief interne de l'élément femelle. Dans ce cas, le bouton définit avantageusement un logement dans lequel un about peut être introduit, avec possibilité de mouvements transversaux par rapport à un axe longitudinal de l'élément femelle, ce pêne étant apte à empêcher les mouvements transversaux d'un about dans ce logement.
- Dans un autre mode de réalisation avantageux, le pêne est mobile selon une direction globalement perpendiculaire à la direction de déplacement du bouton par rapport au corps, entre une première position, où il n'interfère pas avec le corps, et une seconde position, où il fait saillie radialement par rapport au bouton et peut venir en appui contre le corps, en limitant un déplacement du bouton selon une direction radiale par rapport à axe longitudinal de l'élément femelle.

Quel que soit le mode de réalisation de l'invention, la serrure peut être une serrure à barillet complètement intégrée dans le bouton et pourvue de moyens d'obturation par défaut de l'orifice d'introduction d'une clef dans la serrure. Ainsi, l'encombrement global du bouton n'est pas sensiblement modifié par rapport au bouton des raccords de l'état de la technique, de sorte que l'encombrement global du raccord demeure pratiquement inchangé.

L'invention concerne également un raccord rapide pour la jonction amovible de deux canalisations qui comprend un about mâle et un élément femelle tel que précédemment décrit. Un tel raccord est plus sécurisé que les raccords de l'état de la technique alors que son utilisation demeure aisée pour les personnels autorisés à manipuler les moyens de blocage du bouton.

L'invention sera mieux comprise et d'autres avantages de celle-ci apparaîtront plus clairement à la lumière de la description qui va suivre de deux modes de réalisation d'un raccord rapide conforme à son principe, donnée uniquement à titre d'exemple et faite en référence aux dessins annexés dans lesquels :
- la figure 1 est une représentation schématique de principe d'un raccord rapide conforme à l'invention avant accouplement de ses éléments mâle et femelle, l'élément femelle étant représenté en coupe alors que l'about mâle est représenté en vue extérieure ;
- la figure 2 est une vue analogue à la figure 1 alors que les éléments mâle et femelle sont accouplés ;
- la figure 3 est une vue analogue à la figure 1 lorsque l'about mâle est extrait de l'élément femelle ;
- la figure 4 est une vue analogue à la figure 1 lorsque l'about mâle ne peut pas être extrait de l'élément femelle et
- la figure 5 est une vue analogue à la figure 4 pour un dispositif conforme à un second mode de réalisation de l'invention.

Le raccord rapide représenté sur les figures comprend un élément femelle A et un about mâle B prévus pour s'emmancher l'un dans l'autre. La partie arrière de l'élément femelle A est raccordée fluidiquement à une canalisation C₁. De même, la partie arrière de l'about B est raccordée à une seconde canalisation C₂. A titre d'exemple, on peut considérer que la canalisation C₁ est stationnaire alors que la canalisation C₂ est solidaire d'un appareil ou d'un système faisant partie d'une série d'appareils ou de systèmes pouvant être successivement raccordés sur la canalisation C₁. Dans ce cas, l'élément femelle A est destiné à coopérer successivement avec différents abouts mâles B.

La géométrie de l'about B est classique. Cet about comprend une première partie tubulaire 11 sur laquelle est raccordée la canalisation C₂, cette première partie se prolongeant par une seconde partie 12, de diamètre inférieur, comportant une collerette 13 et reliée à la partie 11 par une section de transition 14.

On note 15 l'extrémité avant de l'about B, c'est-à-dire l'extrémité de la partie 12 opposée à la section 14.

La collerette 13 est définie entre une surface annulaire 13a globalement perpendiculaire à l'axe longitudinal X_{B} de l'about B et une surface tronconique 13b qui converge en direction de l'extrémité 15. La collerette 13 est ceinturée par une surface radiale cylindrique 13c reliant les surfaces 13a et 13b.

L'élément femelle A comprend un corps principal 21 globalement tubulaire sur lequel est raccordée la canalisation C₁. On note X_{A} l'axe longitudinal de l'élément A. Le corps 21 est creux et définit un logement 22 de réception de l'about B et de circulation de fluide, ce qui permet de relier les canalisations C₁ et C₂. Le corps 21 est pourvu d'une ouverture 23 à section circulaire centrée sur l'axe X_{A}. Le corps 21 définit également une portée 24 pour une bague 25 équipée de joints non représentés pour assurer l'étanchéité d'une part avec l'about B et d'autre part avec la portée 24.

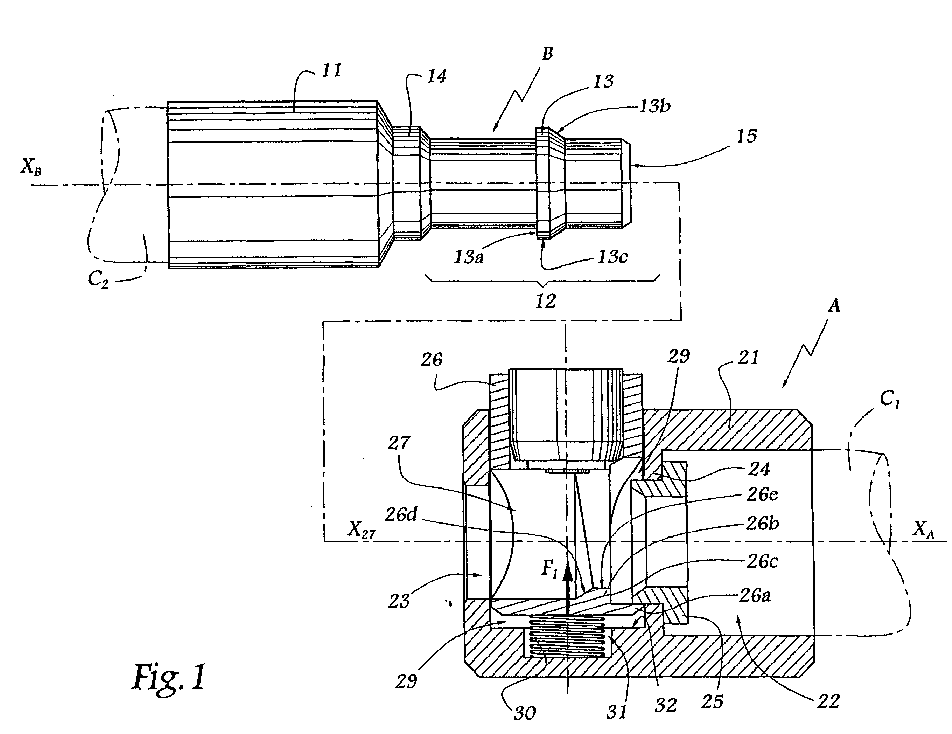

Un dispositif de retenue de l'about B dans l'élément A est prévu et comprend un bouton 26 disposé dans une partie du logement 22 et formant un logement 27 de réception de la partie 12. Le bouton 26 est disposé dans un alésage 29 ménagé dans le corps 21, dans la direction d'un axe Y_{A} perpendiculaire à l'axe X_{A}, c'est-à-dire radial par rapport à celui-ci. Les dimensions respectives de l'alésage 29 et du bouton 26 sont telles que ce bouton peut coulisser selon l'axe Y_{A} par rapport au corps 21. Un ressort 30 est disposé dans un logement 31 prévu dans le fond 32 de l'alésage 29 et exerce sur le bouton 26 un effort élastique F₁ tendant à le repousser vers le haut de la figure 1, c'est-à-dire à le chasser de l'alésage 29. Le bouton 26 comprend une extension 26a qui vient en butée contre la bague 25 sous l'effet de l'effort F₁, ceci afin de limiter le mouvement d'extraction du bouton 26 par rapport à l'alésage 29.

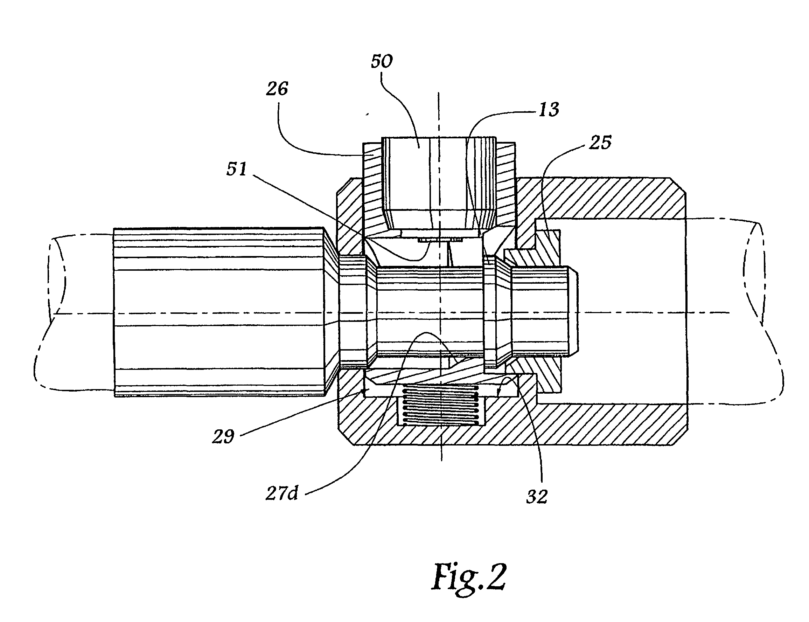

Lorsque l'embout B est introduit dans le logement 22, sa partie 12 traverse le logement 27 et la collerette 13 est disposée entre la bague 25 et une collerette interne 26b du bouton 26. En pratique, la collerette 26b ne s'étend que sur la partie inférieure de la périphérie interne du logement 27. On est alors dans la configuration de la figure 2 où l'about B est retenu en position dans l'élément A par la coopération des collerettes 13 et 26b.

Plus précisément, la collerette 26b est définie entre une surface annulaire 26c, globalement perpendiculaire à un axe central X₂₇ du logement 27, et une surface tronconique 26d convergente en direction de la bague 25. Une surface cylindrique 26e relie les surfaces 26c et 26d.

L'appui surfacique des surfaces 26c et 13a permet un verrouillage efficace de l'about B dans l'élément femelle A.

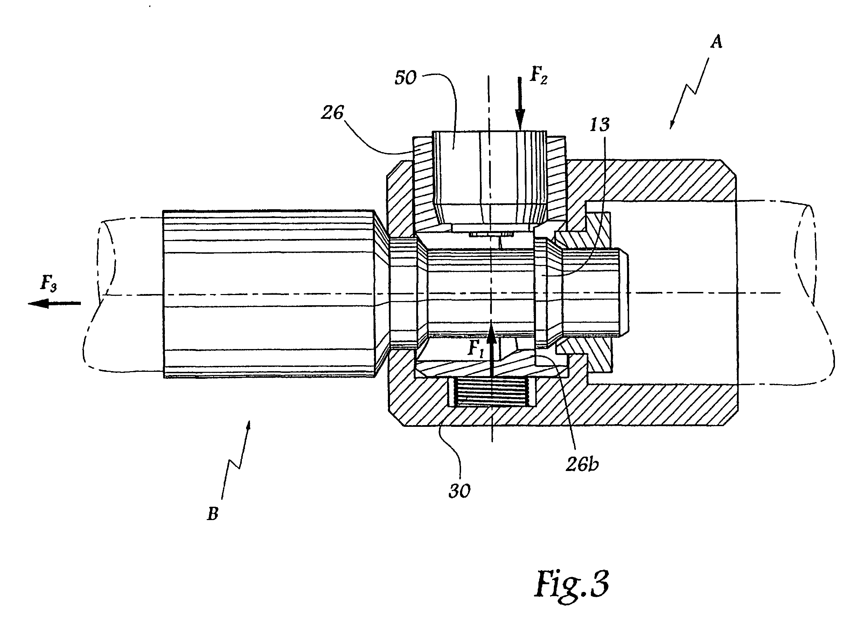

Lorsqu'il convient de libérer l'about A, il suffit d'exercer sur le bouton 26 un effort, représenté par la flèche F₂ à la figure 3, cet effort ayant pour effet de déplacer le bouton 26 à l'encontre de l'effort F₁ exercé par le ressort 30. Ceci dégage la collerette 26b de la trajectoire de la collerette 13 lors de l'extraction de l'about B qui est représentée par la flèche F₃ à la figure 3.

Conformément à l'invention, un barillet 50 est intégré dans le bouton 26 et commande un pêne 51 qui peut ou non faire saillie en direction du fond 32 de l'alésage 29 selon l'état de la serrure comprise dans le barillet 50, cette serrure étant commandée grâce à une clé 52.

Lorsque le pêne 51 ne fait pas saillie à l'extérieur du barillet 50, on est dans la configuration des figures 1 à 3 où l'about mâle B peut être introduit dans l'élément femelle A ou extrait de celui-ci.

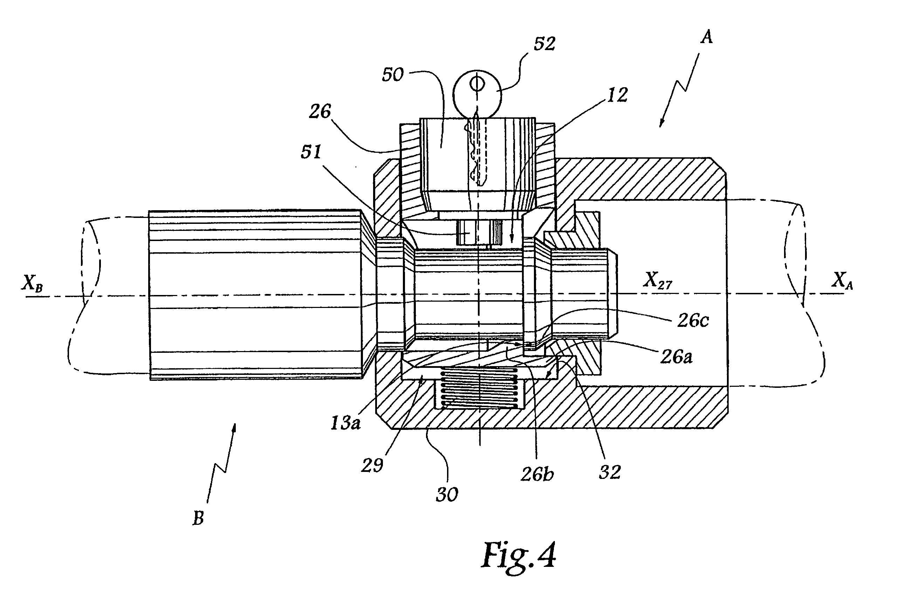

Lorsqu'il convient de verrouiller le raccord formé des éléments A et B en configuration de connexion des canalisations C₁ et C₂, la clé 52 est introduite dans le barillet 50 pour manoeuvrer le pêne 51 qui atteint alors la position de la figure 4 où il empêche un décalage des axes X_{B} et X₂₇ qui sont alors sensiblement confondus. En effet, un effort F₂ exercé sur le bouton 26 dans la configuration de la figure 4 a pour effet de déplacer le bouton 26 à l'encontre de l'effort F₁ exercé par le ressort 30 mais la collerette 26b ne peut pas être décalée par rapport à la collerette 13 car le pêne 51 empêche les mouvements transversaux du bouton 26 dans l'alésage 29 selon la direction Y_{A}. En d'autres termes, le pêne 51 assure que les collerettes 13 et 26b demeurent en appui l'une contre l'autre, ce qui empêche toute extraction intempestive de l'about B par rapport à l'élément femelle A.

Le pêne 51 permet également d'empêcher une connexion intempestive des éléments A et B dans la mesure où, si le barillet 50 est manoeuvré dans la configuration de la figure 1 pour faire saillir le pêne 51 en direction du fond 32 de l'alésage 29, le pêne 51 s'oppose au passage de la collerette 13 au niveau de la collerette 26b. Ainsi, lorsqu'on tente d'introduire la partie 12 dans les logements 27 et 22, le bouton ne peut pas être décalé dans l'alésage 29 en direction du fond 32, comme c'est le cas lorsque le pêne est rétracté. dans le barillet 50.

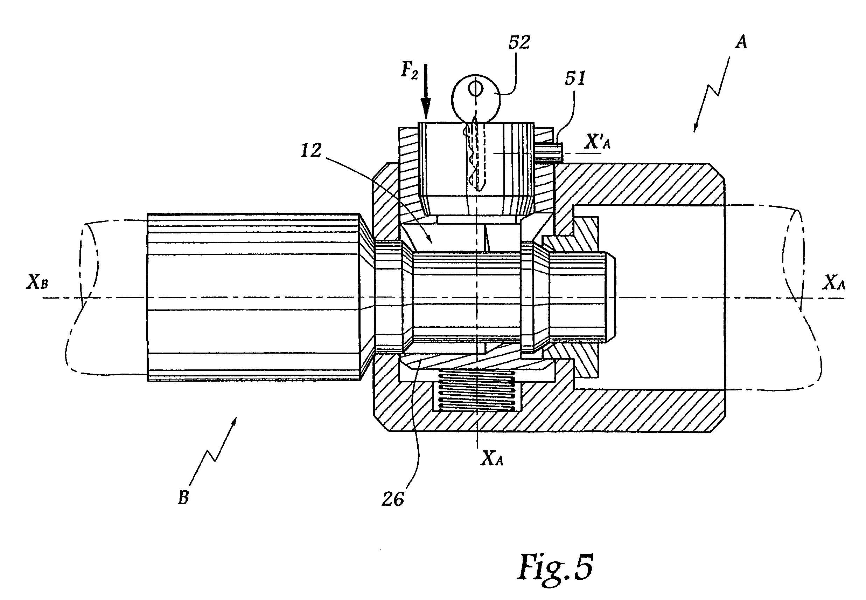

Dans le second mode de réalisation de l'invention, représenté à la figure 5, les éléments analogues à ceux du premier mode de réalisation portent des références identiques. Ce mode de réalisation diffère du précédent en ce que le pêne 51 est ici commandé par le barillet 50 pour faire ou non saillie radialement par rapport au bouton 26, c'est-à-dire selon une direction X'_{A} globalement perpendiculaire à la direction Y_{A} de coulissement du bouton 26 dans l'alésage 29.

La direction X'_{A} peut être ou non parallèle à la direction X_{A}.

Lorsque le pêne 51 fait saillie, comme représenté à la figure 5, il empêche qu'un effort F₂ exercé sur le bouton 26 ne permette de le déplacer en direction du fond 32 de l'alésage 29, de telle sorte que la partie 12 de l'about mâle B demeure immobilisée dans l'élément femelle A.

Ce mode de blocage du bouton 26 permet également d'empêcher une connexion intempestive des éléments A et B.

Comme il ressort des figures jointes, l'intégration d'un barillet 50 dans un bouton 26 d'un raccord conforme à l'invention ne modifie pas sensiblement l'encombrement de ce bouton, ce qui est particulièrement avantageux sur le plan de la manoeuvrabilité des raccords conformes à l'invention.

Compte tenu de l'environnement dans lequel est susceptible d'évoluer un raccord conforme à l'invention, le barillet 50 est avantageusement protégé contre les pollutions externes par des moyens d'obturation de l'orifice d'introduction de la clef 52. Ces moyens peuvent comprendre un organe coulissant ou pivotant qui s'efface de l'orifice en question lors de l'introduction de la clef.

L'invention a été représentée avec un bouton 26 monobloc. Elle est cependant applicable avec un bouton formé de plusieurs pièces assemblées.

L'invention n'est pas limitée à un dispositif comprenant une serrure commandée par une clé. Elle peut également s'appliquer à une serrure avec télécommande ou avec un système à combinaisons.

## Revendications

1. Elément femelle (A) de raccord rapide pour la jonction amovible de deux canalisations (C₁, C₂) parcourues par un fluide, ledit élément comprenant un corps (21) définissant un logement (22 ; 27) de réception d'une partie (12) d'un about mâle (B) et comprenant des moyens (26b) de verrouillage dudit about en configuration emmanchée dans ledit élément femelle, lesdits moyens de verrouillage étant commandés par un bouton (26) mobile par rapport audit corps, selon une direction (Y_{A}) globalement radiale par rapport à un axe longitudinal (X_{A}) dudit élément, **caractérisé en ce que** ledit bouton (26) porte des moyens commandés (50, 51) de blocage sélectif desdits moyens de verrouillage (26b) en configuration de retenue de ladite partie (12) dudit about (B) dans ledit logement (22, 27) et/ou en configuration d'opposition à l'introduction de ladite partie dudit about dans ledit logement.

2. Elément selon la revendication 1, **caractérisé en ce que** ledit bouton (26) forme un logement (27) de réception d'une partie (12) d'un about (B), **en ce que** ledit bouton est pourvu d'au moins un relief interne (26b) apte à coopérer avec au moins un relief externe (13) dudit about pour le verrouillage en configuration emmanchée dudit about dans ledit élément femelle, **en ce que** ledit bouton est apte à commander un mouvement d'écartement relatif desdits reliefs et **en ce que** lesdits moyens de blocage (50, 51) sont aptes à immobiliser ledit about dans ledit logement (27) dans une position où un écartement desdits reliefs interne et externe est impossible.

3. Elément selon la revendication 1, **caractérisé en ce que** ledit bouton (26) forme un logement (27) de réception d'une partie (12) d'un about (B), **en ce que** ledit bouton est pourvu d'au moins un relief interne (26b) apte à coopérer avec au moins un relief externe (13) dudit about pour le verrouillage en configuration emmanchée dudit about dans ledit élément femelle, **en ce que** ledit bouton est apte à commander un mouvement d'écartement relatif desdits reliefs et **en ce que** lesdits moyens de blocage (50, 51) sont aptes à immobiliser ledit bouton dans une position où un écartement desdits reliefs interne et externe est impossible.

4. Elément selon l'une des revendications 2 ou 3, **caractérisé en ce qu'**il comprend des moyens (30) de charge élastique (F₁) dudit bouton (26) vers une position d'engagement de son relief interne (26b) avec un relief externe (13) d'un about (B).

5. Elément selon l'une des revendications précédentes, **caractérisé en ce que** ledit bouton (26) est équipé d'un pêne (51) commandé par une serrure (50).

6. Elément selon la revendication 5, **caractérisé en ce que** ledit pêne (51) est mobile, selon une direction (Y_{A}) globalement parallèle à la direction de déplacement dudit bouton (26) par rapport audit corps (21), ledit pêne étant apte à exercer sur un about mâle (B) un effort de maintien dudit about en position d'engagement d'un relief externe (13) dudit about avec un relief interne (26b) dudit élément femelle (A).

7. Elément selon la revendication 6, **caractérisé en ce que** ledit bouton (26) définit un logement (27) dans lequel un about (B) peut être introduit, avec possibilité de mouvements transversaux par rapport audit axe longitudinal (X_{A}), ledit pêne (51) étant apte à empêcher les mouvements transversaux d'un about dans ledit logement.

8. Elément selon la revendication 5, **caractérisé en ce que** ledit pêne (51) est mobile, selon une direction (X'_{A}) globalement perpendiculaire à la direction de déplacement (Y_{A}) dudit bouton (26) par rapport audit corps (21), entre une première position, où il n'interfère pas avec ledit corps, et une seconde position, où il fait saillie radialement par rapport audit bouton et peut venir en appui contre ledit corps, en limitant un déplacement dudit bouton selon ladite direction de déplacement dudit bouton.

9. Elément selon l'une des revendications 5 à 8, **caractérisé en ce que** ladite serrure est une serrure à barillet (50) complètement intégrée dans ledit bouton (26) et pourvue de moyens d'obturation par défaut de l'orifice d'introduction d'une clef (52) dans ladite serrure.

10. Raccord rapide pour la jonction amovible de deux canalisations comprenant un about mâle (B), **caractérisé en ce qu'**il comprend un élément femelle (A) selon l'une des revendications précédentes.

## Patentansprüche

1. Aufnahmeelement (A) einer Schnellkupplung für die lösbare Verbindung von zwei von einem Fluid durchströmten Leitungen (C₁, C₂), wobei das Element einen einen Aufnahmeraum (22; 27) für einen Teil (12) eines Steckansatzes (B) begrenzenden Körper (21) umfasst und Mittel (26b) zum Verriegeln des Ansatzes in einem in das Aufnahmeelement eingesteckten Zustand umfasst, wobei die Verriegelungsmittel durch einen Knopf (26) gesteuert werden, der in Bezug auf den Körper entsprechend einer im Wesentlichen radialen Richtung (Y_{A}) in Bezug auf eine Längsachse (X_{A}) des Elementes beweglich ist, **dadurch gekennzeichnet, dass** der Knopf (26) gesteuerte Mittel (50, 51) zur selektiven Blockierung der verriegelungsmittel (26b) im Zustand des Haltens des genannten Teils (12) des Ansatzes (B) in dem Aufnahmeraum (22, 27) und/oder im Zustand des Entgegenwirkens gegen die Einführung des genannten,Teils des Ansatzes in den Aufnahmeraum trägt.

2. Element nach Anspruch 1, **dadurch gekennzeichnet, dass** der Knopf (26) einen Raum (27) zur Aufnahme eines Teils (12) eines Ansatzes (B) bildet, dass der Knopf mit mindestens einer Innenerhebung (26) versehen ist, die geeignet ist, mit mindestens einer Außenerhebung (13) des Ansatzes für die Verriegelung im eingesteckten Zustand des Ansatzes in dem Aufnahmeelement zusammenzuarbeiten, dass der Knopf geeignet ist, eine Bewegung der relativen Entfernung der Erhöhungen voneinander zu steuern, und dass die Mittel zum Blockieren (50, 51) in der Lage sind, den Ansatz in der Aufnahme (27) in einer Position festzulegen, in der ein Entfernen der Innenerhöhung von der Außenerhöhung unmöglich ist.

3. Element nach Anspruch 1, **dadurch gekennzeichnet, dass** der Knopf (26) einen Raum (27) zur Aufnahme eines Teils (12) eines Ansatzes (B) bildet, dass der Knopf mit mindestens einer Innenerhebung (26) versehen ist, die geeignet ist, mit mindestens einer Außenerhebung (13) des Ansatzes für die Verriegelung im eingesteckten Zustand des Ansatzes in dem Aufnahmeelement zusammenzuarbeiten, dass der Knopf geeignet ist, eine Bewegung der relativen Entfernung der Erhöhungen voneinander zu steuern, und dass die Mittel (50, 51) zum Blockieren geeignet sind, den Knopf in einer Position festzulegen, in der ein Entfernen der Innen- von der Außenerhöhung unmöglich ist.

4. Element nach einem der Ansprüche 2 oder 3, **dadurch gekennzeichnet, dass** es Mittel (30) zur elastischen Vorspannung (F₁) des Knopfes (26) in eine Position des Eingriffs seiner Innenerhöhung (26b) mit einer Außenerhöhung (13) eines Ansatzes (B) umfasst.

5. Element nach einem der vorhergehenden Ansprüche, **dadurch gekennzeichnet, dass** der Knopf (26) mit einem Riegel (51) ausgerüstet ist, der von einem Schloss (50) gesteuert wird.

6. Element nach Anspruch 5, **dadurch gekennzeichnet, dass** der Riegel (51) in eine Richtung (X_{A}) im Wesentlichen parallel zur Richtung der Verschiebung des Knopfes (26) in Bezug auf den Körper (21) beweglich ist, wobei der Riegel geeignet ist, auf den Einsteckansatz (B) eine Kraft zum Halten des Ansatzes in der Position des Eingriffs einer Außenerhöhung (13) des Ansatzes mit einer Innenerhöhung (26b) des Aufnahmeelementes (A) auszuüben.

7. Element nach Anspruch 6, **dadurch gekennzeichnet, dass** der Knopf (26) einen Aufnahmeraum (27) begrenzt, in den ein Ansatz (B) mit der Möglichkeit von Querbewegungen in Bezug auf die Längsachse (X_{A}) eingeführt werden kann, wobei der Riegel (51) geeignet ist, die Querbewegungen eines Ansatzes in dem Aufnahmeraum zu verhindern.

8. Element nach Anspruch 5, **dadurch gekennzeichnet, dass** der Riegel (51) in eine Richtung (X'_{A}) im Wesentlichen senkrecht zur Verschiebungsrichtung (Y_{A}) des Knopfes (26) in Bezug auf den Körper (21) zwischen einer ersten Position, in dem er nicht mit dem Körper interferiert, und einer zweiten Position beweglich ist, in der er radial in Bezug auf den Knopf hervorragt und gegen den Körper in Abstützung kommen kann, wobei eine Verschiebung des Knopfes entsprechend der Richtung der Verschiebung des Knopfes begrenzt wird.

9. Element nach einem der Ansprüche 5 bis 8, **dadurch gekennzeichnet, dass** das Schloss ein Zylinderschloss (50) ist, das vollständig in dem Knopf (26) integriert ist und mit Mitteln zum Verschließen der Einführöffnung ohne Schlüssel (52) im Schloss versehen ist.

10. Schnellkupplung für die lösbare Verbindung von zwei Leitungen mit einem Einsteckansatz (B), **dadurch gekennzeichnet, dass** sie ein Aufnahmeelement (A) nach einem der vorhergehenden Ansprüche umfasst.

## Claims

1. Female quick-link connecting element (A) for detachably joining two tubes (C₁, C₂) through which a fluid passes, the element comprising a body (21) defining a housing (22; 27) for receiving one part (12) of a male butt (B) and . comprising means (26b) of locking the butt in a shrink-fit configuration in the female element, the locking means being controlled by a button (26) which is movable relative to the body in a general radial direction (Y_{A}) relative to a longitudinal axis (X_{A}) of the element, **characterised in that** the button (26) carries controlled means (50, 51 ) for selectively blocking the locking means (26b) in a configuration of retention of the part (12) of the butt (B) in the housing (22, 27) and/or in a configuration of opposition to the insertion of the part of the butt in the housing.

2. Element according to claim 1, **characterised in that** the button (26) forms a housing (27) for receiving part (12) of a butt (B), **in that** the button is provided with at least one internal projection (26b) capable of cooperating with at least one external projection (13) of the butt in order to lock the same in a shrink-fit configuration of the butt in the female element, **in that** the button is capable of controlling a relative separation movement of the projections and **in that** the blocking means (50, 51) are capable of immobilising the butt in the housing (27) in a position where separation of the internal and external projections is impossible.

3. Element according to claim 1, **characterised in that** the button (26) forms a housing (27) for receiving part (12) of a butt (B), **in that** the button is provided with at least one internal projection (26b) capable of cooperating with at least one external projection (13) on the butt in order to lock the butt in the female element in a shrink-fit configuration, **in that** the button is capable of controlling a relative separation movement of the projections, and **in that** the blocking means (50, 51) are capable of immobilising the button in a position where separation of the internal and external projections is impossible.

4. Element according to either of claims 2 or 3, **characterised in that** it comprises means (30) of imposing a resilient load (F₁) on the button (26) towards a position of engagement of its internal projection (26b) with an external projection (13) of a butt (B).

5. Element according to one of the preceding claims, **characterised in that** the button (26) is equipped with a catch (51) controlled by a lock (50).

6. Element according to claim 5, **characterised in that** the catch (51) is movable in a direction (Y_{A}) generally parallel to the displacement direction of the button (26) relative to the body (21), the catch being capable of exerting on a male butt (B) a force that supports the butt in the engagement position of an external projection (13) of the butt with an internal projection (26b) of the female element (A).

7. Element according to claim 6, **characterised in that** the button (26) defines a housing (27) in which a butt (B) can be inserted, permitting transverse movements relative to the longitudinal axis (X_{A}), the catch (51) being capable of preventing transverse movements of a butt in the housing.

8. Element according to claim 5, **characterised in that** the catch (51) is movable in a direction (X'_{A}) generally perpendicular to the displacement direction (Y_{A}) of the button (26) relative to the body (21), between a first position where it does not interfere with the body, and a second position where it projects radially relative to the button and may bear on the body, restricting the displacement of the button in the displacement direction of the button.

9. Element according to one of claims 5 to 8, **characterised in that** the lock is a spring-barrel lock (50) which is completely incorporated in the button (26) and is provided with means of sealing by default the aperture for the insertion of a key (52) in the lock.

10. Quick-link connection for detachably joining two tubes comprising a male butt (B), **characterised in that** it comprises a female element (A) according to one of the preceding claims.
